(19) Europäisches Patentamt / European Patent Office / Office européen des brevets

(11) **EP 4 502 662 A1**

(12) **EUROPEAN PATENT APPLICATION**
published in accordance with Art. 153(4) EPC

(43) Date of publication:
05.02.2025 Bulletin 2025/06

(21) Application number: 23778977.1

(22) Date of filing: 16.02.2023

(51) International Patent Classification (IPC):
*G02B 1/02* (2006.01)  *G02B 3/00* (2006.01)
*G02B 5/18* (2006.01)  *H04N 23/55* (2023.01)

(52) Cooperative Patent Classification (CPC):
**G02B 1/02; G02B 3/00; G02B 5/18; H04N 23/55**

(86) International application number:
**PCT/JP2023/005439**

(87) International publication number:
**WO 2023/188947 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 31.03.2022 JP 2022058053

(71) Applicant: **Panasonic Intellectual Property
Management Co., Ltd.
Osaka-shi, Osaka 540-6207 (JP)**

(72) Inventors:
• **MASUDA, Keigo**
  Kadoma-shi, Osaka 571-0057 (JP)
• **TAKEDA, Eiji**
  Kadoma-shi, Osaka 571-0057 (JP)
• **MINAMI, Kazuhiro**
  Kadoma-shi, Osaka 571-0057 (JP)

(74) Representative: **Grünecker Patent- und
Rechtsanwälte
PartG mbB
Leopoldstraße 4
80802 München (DE)**

(54) **OPTICAL LENS, OPTICAL SYSTEM, AND IMAGING DEVICE**

(57) An optical lens is used for light in a predetermined target wavelength region. The optical lens includes a substrate and a plurality of microstructures arranged on a surface of the substrate at intervals shorter than the shortest wavelength in the target wavelength region. A structure and/or the interval of each of the plurality of microstructures is determined in such a way as to compensate for a variation in phase and/or transmittance depending on the incident angle of the incident light at each position in the region where the plurality of microstructures is provided.

FIG. 14

**Description**

Technical Field

The present disclosure relates to an optical lens, an optical system, and an imaging device.

Background Art

In recent years, research and development of metalenses each having a microscopic surface structure called a metasurface has been in progress. The metasurface is a surface having a metamaterial structure that realizes an optical function that does not occur in nature. The metalens can realize an optical function equivalent to a combination of multiple optical lenses according to the related art by using a single thin flat plate structure. Accordingly, the metalens can contribute to size reduction and weight reduction of an instrument equipped with lenses, such as a camera, a LiDAR sensor, a projector, and an AR (augmented reality) display unit. Examples of the metalenses and devices using the metalenses are disclosed in PTLs 1 to 3, for instance.

PTL 1 discloses a metalens including a substrate and multiple nanotstructures disposed on the substrate. In this metalens, each of the multiple nanostructures brings about an optical phase shift that varies depending on its position, and the optical phase shift of each nanostructure defines a phase profile of the metalens. The optical phase shift of each nanostructure depends on a position of the relevant nanostructure and either a size or an orientation of the nanostructure. A nanofin and a nanopillar are exemplified as examples of such a nanostructure. PTL 1 describes a concept of realizing a desired phase shift by adjusting angles to layout respective nanofins or by adjusting sizes of respective nanopillars.

PTL 2 discloses a compact lens assembly including a metalens and an electronic device including the lens assembly. The metalens disclosed in PTL 2 includes a nanostructure array and is configured to form the same phase delay profile regarding at least two wavelengths being included in incident light and different from each other. In this metalens, a width of each of multiple inner pillars included in the nanostructure array is appropriately determined in accordance with a required amount of phase delay in order to realize a desired phase delay profile.

PTL 3 discloses a structure of a metalens in which an aperture diaphragm is provided on a surface of a substrate and a metasurface is provided on a surface on an opposite side of the substrate. According to the metalens of PTL 3, light focusing at a wide view angle is realized with a thin flat plate structure.

Citation List

Patent Literature

PTL 1: Japanese Unexamined Patent Application Publication (Translation of PCT Application) No. 2019-516128
PTL 2: Japanese Unexamined Patent Application Publication No. 2021-71727
PTL 3: U.S. Patent Application Publication No. 2021/0306564

Summary of Invention

Technical Problem

According to the existing designing methods for a metalens, an imaging performance may be deteriorated with an increase in an incident angle, and blur may occur on an imaging surface.

The present disclosure provides a novel optical lens that can suppress deterioration in imaging performance associated with an increase in an incident angle. Solution to Problem

An optical lens according to an aspect of the present disclosure is used for light in a predetermined target wavelength region. The optical lens includes a substrate and a plurality of microstructures arranged on a surface of the substrate at intervals shorter than the shortest wavelength in the target wavelength region. A structure and/or the interval of each of the plurality of microstructures varies depending on a position on the surface and in accordance with an incident angle of incident light at each position in a region where the plurality of microstructures is provided.

A method according to another aspect of the present disclosure is a method of manufacturing an optical lens used for light in a predetermined target wavelength region. The optical lens is provided with a plurality of microstructures arranged at intervals shorter than the shortest wavelength in the target wavelength region. The method includes determining a structure and/or the interval of each of the plurality of microstructures in such a way as to compensate for a variation in phase and/or transmittance depending on an incident angle of incident light at each position in a region where the plurality of microstructures is provided and forming the plurality of microstructures on a surface of a substrate in such a way as to be arranged at the determined intervals.

A comprehensive or specific aspect of the present disclosure may be realized by a system, an apparatus, a method, an integrated circuit, a computer program, or a computer-readable storage medium such as a storage disk, or may be realized by any combination of a system, an apparatus, a method, an integrated circuit, a computer program, and a storage medium as such. The computer-readable storage medium may include a nonvolatile storage medium such as a CD-ROM (Compact Disc - Read Only Memory). The apparatus may be formed from one or more devices. In the case where the apparatus is formed from two or more devices, the two or more devices may be disposed in a single instrument or may be individually disposed in two or more separate instruments. In the present specification and claims, the term "device" may not only mean a single device but may also mean a system formed from multiple devices.

Advantageous Effects of Invention

According to an aspect of the present disclosure, it is possible to suppress deterioration in imaging performance associated with an increase in an incident angle of light on a lens.

Brief Description of Drawings

[Fig. 1] Fig. 1 is a perspective view schematically illustrating an example of a metalens.
[Fig. 2] Fig. 2 is a perspective view schematically illustrating an example of a structure of one unit cell.
[Fig. 3] Fig. 3 is a diagram schematically illustrating a function of the metalens.
[Fig. 4] Fig. 4 is a diagram illustrating multiple areas segmented depending on incident angles of a main light beam in a metalens according to an exemplary embodiment of the present disclosure.
[Fig. 5] Fig. 5 is a diagram illustrating an example of a combination of array maps optimized depending on the incident angles.
[Fig. 6A] Fig. 6A is a diagram illustrating an example of design data representing relations between diameters of microstructures and amounts of phase shift of incident light.
[Fig. 6B] Fig. 6B is a diagram illustrating an example of design data representing relations between the diameters of the microstructures and transmittance of the incident light.
[Fig. 7] Fig. 7 is a diagram schematically illustrating a unit cell used in a simulation.
[Fig. 8A] Fig. 8A is a diagram illustrating an example of design data representing relations between pitches and phases of the microstructures.
[Fig. 8B] Fig. 8B is a diagram illustrating an example of design data representing relations between the pitches and the transmittance of the microstructures.
[Fig. 9A] Fig. 9A is a diagram illustrating an example of an ideal phase profile in a case where the incident angle is equal to 0 degrees.
[Fig. 9B] Fig. 9B is a diagram illustrating another example of the ideal phase profile in a case where the incident angle is equal to 30 degrees.
[Fig. 9C] Fig. 9C is a diagram that exemplifies a light focusing performance of a metalens that realizes the ideal phase profile.
[Fig. 10A] Fig. 10A is a diagram illustrating an example of a phase profile (at the incident angle of 0 degrees) reproduced by a unit cell designed in accordance with a method of the related art.
[Fig. 10B] Fig. 10B is a diagram illustrating another example of the phase profile (at the incident angle of 30 degrees) reproduced by the unit cell designed in accordance with the method of the related art.
[Fig. 10C] Fig. 10C is a diagram exemplifying a light focusing performance of a metalens designed in accordance with the method of the related art.
[Fig. 11A] Fig. 11A is a diagram illustrating an example of a phase profile (at the incident angle of 0 degrees) reproduced by a unit cell designed in accordance with a method of an embodiment.
[Fig. 11B] Fig. 11B is a diagram illustrating another example of the phase profile (at the incident angle of 30 degrees) reproduced by the unit cell designed in accordance with the method of the embodiment.
[Fig. 11C] Fig. 11C is a diagram exemplifying a light focusing performance of a metalens designed in accordance with the method of the embodiment.
[Fig. 12A] Fig. 12A is a diagram illustrating a schematic configuration of an imaging device.
[Fig. 12B] Fig. 12B is a diagram illustrating an example of multiple light beams that pass through an aperture diaphragm.
[Fig. 13A] Fig. 13A is a diagram illustrating a schematic configuration of a light irradiation device.

[Fig. 13B] Fig. 13B is a diagram illustrating an example of a light beam that is normally incident on a metalens through a scanning optical system.

[Fig. 13C] Fig. 13C is a diagram illustrating an example of a light beam that is obliquely incident on the metalens through the scanning optical system.

[Fig. 14] Fig. 14 is a diagram schematically illustrating an example of the metalens.

[Fig. 15] Fig. 15 is a diagram illustrating an example of a method of area segmentation of a lens surface.

[Fig. 16] Fig. 16 is a diagram illustrating a difference in effect between a comparative example and the example.

[Fig. 17] Fig. 17 is a schematic sectional view illustrating an example of a metalens including an optical modulation layer.

[Fig. 18] Fig. 18 is a diagram illustrating an example of a metalens in which an optical modulation layer includes other multiple microstructures.

Description of Embodiments

An exemplary embodiment of the present disclosure will be described below. Each embodiment described below represents a comprehensive or specific example. Numerical values, shapes, constituents, layout positions and modes of connection of the constituents, steps, the order of the steps, and the like depicted in the following embodiment are mere examples and are not intended to restrict the present disclosure. Meanwhile, of the constituents in the following embodiment, a constituent not defined in an independent claim that represents the highest conception will be described as an optional constituent. In the meantime, the respective drawings are schematic diagrams and are not always illustrated precisely. Moreover, in the respective drawings, identical or similar constituents are denoted by the same reference signs. Overlapping explanations may be omitted or simplified as appropriate.

In the present disclosure, the term "light" is used not only for visible light (with a wavelength from about 400 nm to about 700 nm) but also for invisible light. The invisible light means electromagnetic waves included in a wavelength region of ultraviolet rays (with a wavelength from about 10 nm to about 400 nm), infrared rays (with a wavelength from about 700 nm to about 1 mm), or an electric wave (with a wavelength from about 1 mm to about 1 m). An optical lens in the present disclosure may be used not only for the visible light but also for the invisible light such as the ultraviolet rays, the infrared rays, or the electric wave.

(Underlying Knowledge Forming Basis of the Present Disclosure)

First, an example of a basic configuration of an optical lens in the present disclosure and knowledge obtained by the inventors of the present disclosure will be described.

In the following description, the optical lens may also be referred to as a "metalens". The metalens is an optical element including multiple microstructures being smaller than a wavelength of incident light and provided on its surface, and configured to realize a lens function by a phase shift attributed to those microstructures. It is possible to adjust optical characteristics of the incident light such as a phase, an amplitude, or polarization thereof by appropriately designing shapes, sizes, orientations, and layouts of the respective microstructures.

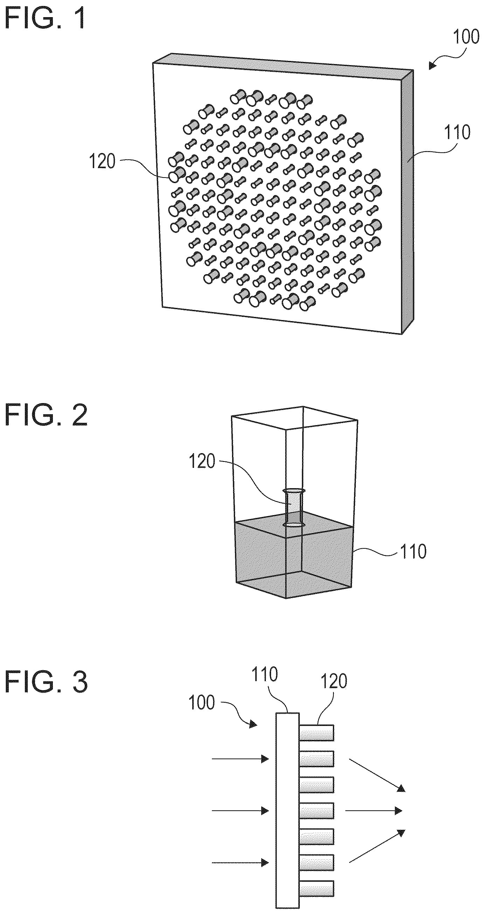

Fig. 1 is a perspective view schematically illustrating an example of the metalens. A metalens 100 illustrated in Fig. 1 includes a substrate 110 and multiple microstructures 120 provided on a surface of the substrate 110. In the following description, the surface provided with the multiple microstructures 120 may be referred to as a "lens surface" as appropriate. Each of the microstructures 120 in the example illustrated in Fig. 1 is a columnar body having a circular cylindrical shape (also referred to as a "pillar"). A unit element including one microstructure 120 in the metalens 100 will be referred to as a "unit cell". The metalens 100 is an aggregate of multiple unit cells.

Each microstructure 120 may have a shape other than the circular cylinder. For example, each microstructure 120 may be a columnar body having such a shape as an elliptic cylinder other than the circular cylinder, or a polygonal prism. Alternatively, each microstructure 120 may be a conical or pyramidal body having such a shape as an elliptic cone (inclusive of a circular cone) or a polygonal pyramid. Moreover, each microstructure 120 is not limited only to a projecting body such as the columnar body or the conical or pyramidal body, but may also be a recessed body. The projecting body or the recessed body constituting the microstructure 120 may take on any structure including the columnar body having the shape of the elliptic cylinder or the polygonal prism, the conical or pyramidal body having the shape of the elliptic cone or the polygonal pyramid, or the like.

Fig. 2 is a perspective view schematically illustrating an example of a structure of one unit cell. The one unit cell includes a portion of the substrate 110, and one microstructure 120 projecting from the portion of the substrate 110. Each unit cell causes a phase shift of incident light in accordance with the structure of the microstructure 120.

Fig. 3 is a diagram schematically illustrating a function of the metalens 100. In Fig. 3, arrows represent examples of light beams. The metalens 100 in this example has a function to focus the incident light as with a convex lens according to the related art. In the example of Fig. 3, the incident light that is incident on the substrate 110 side of the metalens 100 is subjected to a different phase variation depending on the position by an array of the microstructures 120, thereby being focused. Shapes, widths, heights, orientations, or the like of the respective microstructures 120 are appropriately determined in order to realize a desired light focusing performance. A structure of each microstructure 120 may be appropriately determined based on data indicating a phase profile supposed to be realized and on a result of an electromagnetic field simulation, for example.

The microstructures 120 may each have a sub-wavelength size (a width and a height, for example) shorter than the wavelength of the incident light on the metalens 100, and may be arranged at sub-wavelength intervals or pitches. An "interval" of the microstructures 120 is a distance between the centers of two adjacent microstructures 120 when viewed in a direction perpendicular to the surface of the substrate 110. The microstructures 120 may be periodically arranged or may be aperiodically arranged.

The metalens 100 may be designed in such a way as to realize a desired optical performance with light in a predetermined target wavelength region. The target wavelength region is a wavelength region determined by specifications, for example. In a case where a lower limit of the target wavelength region is equal to 1 $\mu$m, for example, the size and the interval of the microstructures 120 may be set to a value shorter than 1 $\mu$m. A microstructure having such a nanoscale size less than 1 $\mu$m may be referred to as a "submicron structure" or a "nanostructure" as appropriate. In a case where the target wavelength region is equivalent to a wavelength region of an infrared range, the size and the interval of the microstructures 120 may be greater than 1 $\mu$m.

The number of pieces of the microstructures 120 provided on the surface of the metalens 100 is determined to be an appropriate number depending on a lens performance supposed to be realized. The number of pieces of the microstructures 120 is in a range from 100 to 10000, for example, but may be less than 100 or greater than 10000 in some cases.

Here, a method of designing a metalens according to the related art will be briefly explained. For example, there is the method disclosed in PTL 3 as the method of designing the metalens according to the related art. In the metalens disclosed in PTL 3, an aperture diaphragm is used in order to realize a high imaging performance. By using the aperture diaphragm, the light reaching the lens surface is restricted to light having an incident angle within a certain range, and the high imaging performance is realized. The shape, size, or layout of each of the multiple microstructures arranged on the surface of the metalens is appropriately designed so as to realize the desired phase profile.

An amount of phase shift of light passing through the unit cell depends on the structure such as the shape, the size, the orientation, or the like of the microstructure included in the relevant unit cell or on the interval (or the pitch) of the microstructures. For example, the desired phase profile can be realized by appropriately determining the widths or the intervals of the microstructures based on the positions of the unit cells and in accordance with the required amount of phase shift. Parameters such as the widths or the intervals of the microstructures may be determined with reference to design data representing relations between the parameters and the phases, which are obtained by a simulation in advance, for example.

In the designing method according to the related art, the parameters such as the widths or the intervals are determined with reference to the same design data at any position within the lens surface. However, in a case where a response of the phase variation with respect to a change in parameter of the unit cell varies with the incident angle of light, the above-described designing method cannot reproduce ideal phase distribution with respect to obliquely incident light. In the above-described designing method, the imaging performance is deteriorated when the incident angle is increased. Accordingly, an MTF (modulated transfer function) is gradually deteriorated from the center toward an end of an imaging surface, thus causing a problem of developing blur.

As a consequence, an application of the designing method according to the related art is restricted to the unit cell that does not have a dependency on the incident angle, and usage thereof is limited. Meanwhile, in the case of the unit cell that does not have the dependency on the incident angle, the method cannot deal with a sharp phase variation at the outermost portion of the lens attributed to an increase in area of the lens or a low F value (that is, an increase in brightness), thus possibly causing a problem of a deterioration in imaging performance as well.

The inventors of the present disclosure have found out the aforementioned problems and conceived of a configuration of an optical lens capable of solving these problems. A configuration of an optical lens according to an embodiment of the present disclosure will be described below.

(Embodiment)

An optical lens according to the exemplary embodiment of the present disclosure is used for light in a predetermined target wavelength region. The optical lens includes a substrate, and multiple microstructures arranged on a surface of the substrate. The multiple microstructures are arranged at intervals shorter than the shortest wavelength in the target wavelength region.

Here, the "target wavelength region" is a wavelength region in which the use of the optical lens is assumed, and may be determined based on the specifications of the optical lens or on the specifications of an instrument that mounts the optical lens. The target wavelength region may include at least a portion of the wavelength region (from about 400 nm to about 700 nm) of the visible light, for example. Meanwhile, the target wavelength region may include at least a portion of the wavelength region (with the wavelength from about 10 nm to about 400 nm) of the ultraviolet rays. In the meantime, the target wavelength region may include at least a portion of the wavelength region (from about 700 nm to about 1 mm) of the infrared rays. Meanwhile, the target wavelength region may include at least a portion of the wavelength region (with the wavelength from about 1 mm to about 1 m) of the electric wave. In a certain example, the target wavelength region may include at least a portion of the wavelength region of the infrared rays from 2.5 $\mu$m to 25 $\mu$m. The wavelength region from 2.5 $\mu$m to 25 $\mu$m may suitably be used for a sensing device using the infrared rays such as a LiDAR sensor or an infrared camera, for example. Here, the term "wavelength" in the present disclosure means a wavelength in free space unless otherwise stated.

The substrate and each microstructure may be formed from a material having transparency with respect to light in the target wavelength region. Here, the expression "having transparency" means having a characteristic of causing the incident light to pass through at transmittance greater than 50%. In a certain embodiment, the substrate 110 and each microstructure 120 may be formed from a material that causes the light in the target wavelength region to pass through at the transmittance greater than or equal to 80%.

The "interval" between the microstructures means a distance between the centers of two adjacent microstructures when viewed in a direction perpendicular to the surface of the substrate (or the lens surface). In the case where the shortest wavelength in the target wavelength region is equal to 2.5 $\mu$m, for example, a distance between the centers of any two microstructures located adjacent to each other out of the multiple microstructures is less than 2.5 $\mu$m. Here, since the widths of the microstructures are less than the intervals between the microstructures, the widths of the microstructures are also shorter than the shortest wavelength in the target wavelength region.

The structure and/or the interval of each of the multiple microstructures varies depending on the position on the surface and in accordance with an incident angle of the incident light at each position in the region where the multiple microstructures are provided. For example, the structure and/or the interval of each of the multiple microstructures is determined in such a way as to compensate for the variation in phase depending on the incident angle of the incident light at each position in the region where the multiple microstructures are provided. Here, the expression "to compensate for the variation in phase" means to reduce the variation in phase.

The above-described configuration suppresses the variation in phase depending on the incident angles of the incident light at the respective positions in the region where the multiple microstructures are provided. For this reason, even in the case where the light is obliquely incident on the optical lens, the ideal phase is realized easily so that the light focusing performance can be improved.

In the above-described optical lens, an amount of variation in phase and/or transmittance in the case where the incident light is incident on the multiple microstructures may indicate a response being different depending on each incident angle.

The structure and/or the interval of each of the multiple microstructures may be determined based on design data defining a relation between at least one parameter defining the structure and/or the interval, and the phase and/or the transmittance, the design data being created for each of the multiple incident angles. The design data may be created in advance for each of multiple areas included in the region where the microstructures are arranged. Each of the multiple areas corresponds to one of the multiple incident angles. The structure and/or the interval of each of the multiple microstructures may be determined based on the design data corresponding to one of the multiple areas that the position of the microstructure belongs to.

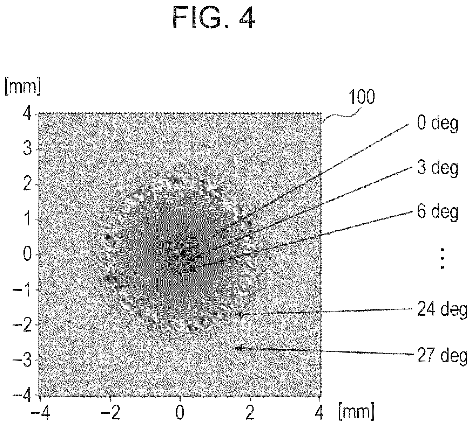

Fig. 4 is a diagram illustrating the multiple areas segmented depending on incident angles of a main light beam in the metalens 100 (namely, the optical lens) according to the exemplary embodiment of the present disclosure. The main light beam is a light beam that defines the center of a light beam flux that is incident on the metalens 100. In the case where an aperture diaphragm is disposed in front of the metalens 100, the light beam that is incident on the metalens 100 after passing through the center of the aperture diaphragm constitutes the main light beam. The metalens 100 in the present embodiment broadly includes the structure illustrated in Fig. 1. Each microstructure 120 in the present embodiment includes a circular cylindrical structure. The width (that is, the diameter) of each microstructure 120 is determined based on a preset ideal phase profile and on design data corresponding to the incident angle of the main light beam that is incident on the position of the relevant microstructure 120. In the example of Fig. 4, the lens surface is segmented into 10 areas depending on the incident angles (or the distances from an optical axis) of the main light beam. In Fig. 4, an area of which structures such as the diameters of the microstructures 120 or parameters such as the intervals thereof are determined based on the same design data is expressed with the same density. In this example, the different design data are used each time the incident angle changes by 3 degrees (deg). Here, the number of segmentation of the lens surface is not limited to 10 but may be less than or equal to 9 or may be greater than or equal to 11. The width of the incident angle of each area is not limited to 3 degrees, either, but may be set to any degrees such as 1 degree, 2 degrees, 4 degrees, 5 degrees, or the like, for example.

In the example of Fig. 4, the shape of the lens surface is an 8 mm × 8 mm square, and the multiple microstructures 120 are concentrically arranged within this lens surface at intervals from about 2 $\mu$m 6 $\mu$m, for example. However, the shape and the size of the metalens 100 as well as the layout of the microstructures 120 are not limited to this example, but may be designed appropriately depending on required lens performances.

The parameters such as the diameters or the intervals of the respective microstructures 120 are determined so as to realize the desired phase profile. For example, the diameters of the respective microstructures 120 may be determined based on the design data created in advance based on a simulation. In that case, the design data represents the relations between the diameter of the microstructure 120 and the amount of phase shift of the light incident on the unit cell including the relevant microstructure 120. The design data are created for the respective areas that are segmented in accordance with the ranges of the incident angle of the main light beam. The diameter of each microstructure 120 in each area may be determined based on the relation between the diameter and the phase represented by the design data corresponding to each area of the metalens 100. Data representing distribution of the diameters of the microstructures 120 within the lens surface will be hereinafter referred to as an "array map".

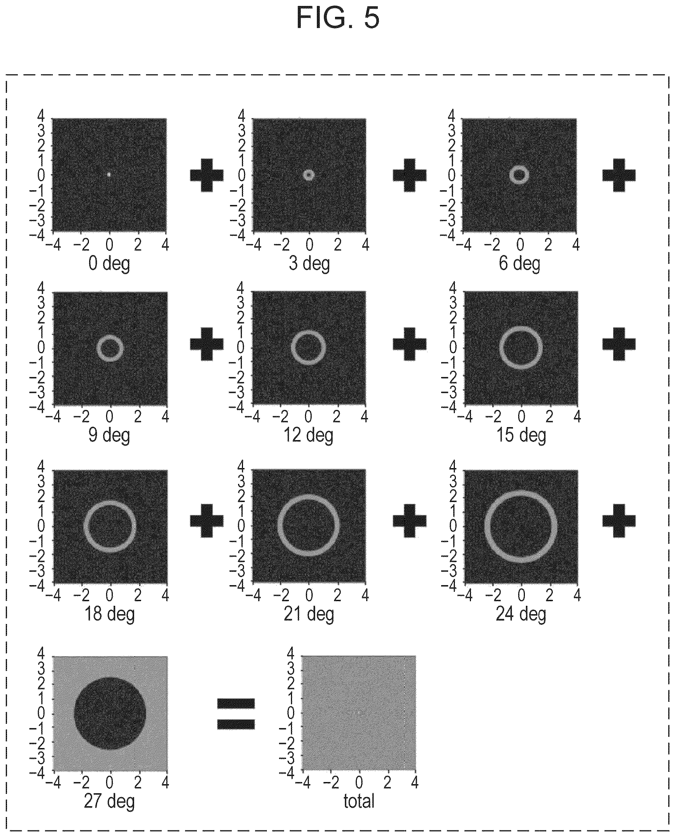

Fig. 5 is a diagram illustrating an example of a combination of the array maps optimized depending on the incident angles. The array maps in this example are determined for a total of 10 respective areas including 9 areas having angular widths of 3 degrees and being centered on 0 degrees, 3 degrees, 6 degrees, 9 degrees, 12 degrees, 15 degrees, 18 degrees, 21 degrees, and 24 degrees, as well as an area exceeding 27 degrees. An overall array map is obtained by summing up the array maps for these 10 areas. An array of the microstructures 120 may be formed in accordance with the distribution of the diameters represented by this array map.

Next, examples of the design data for determining the diameters of the microstructures 120 will be described.

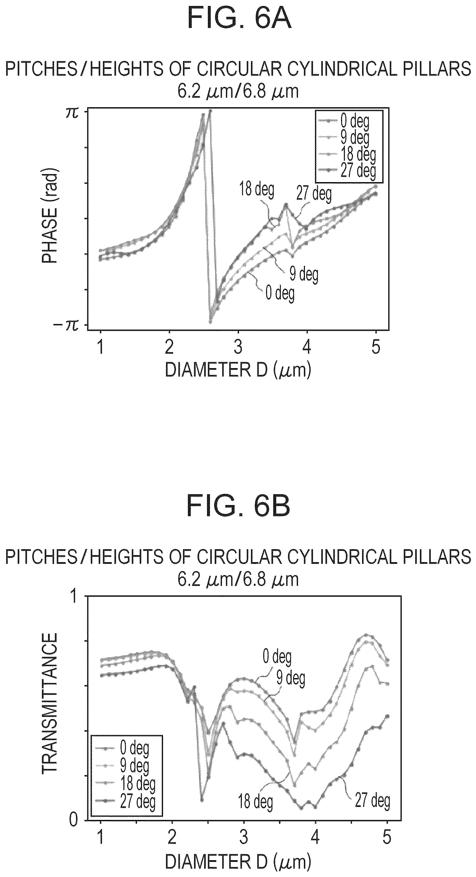

Fig. 6A is a diagram illustrating an example of the design data representing a relation between the diameter of a microstructure 120 and an amount of phase shift of incident light incident on the unit cell including the microstructure 120. Fig. 6B is a diagram illustrating an example of design data representing a relation between the diameter of the microstructure 120 and the transmittance of the incident light through the unit cell including the microstructure 120. These design data have been obtained by conducting respective simulations with multiple types of the incident light having different incident angles. Figs. 6A and 6B exemplify simulation results regarding four types of the incident light having the respective incident angles of 0°, 9°, 18°, and 27°. In these examples, each microstructure 120 is a circular cylindrical pillar having a height of 6.8 $\mu$m, and the multiple microstructures 120 are arranged from the center toward the outer periphery of the lens surface at the pitch of 6.2 $\mu$m.

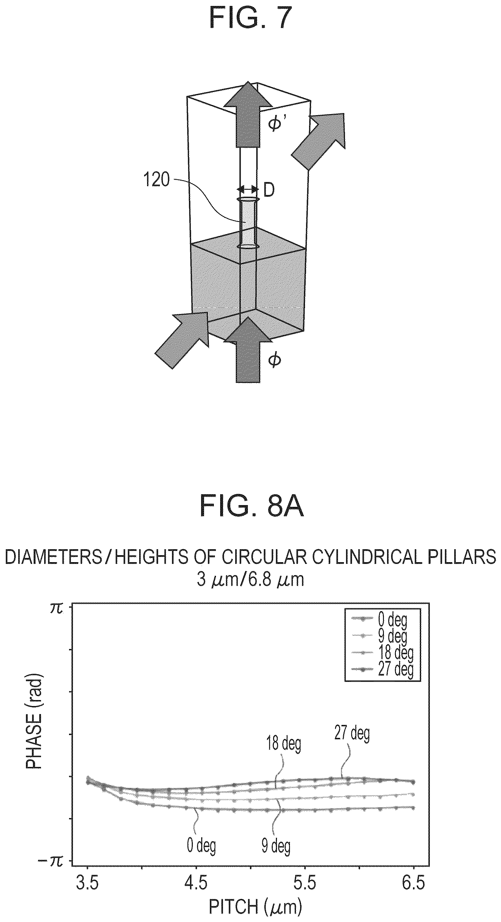

Fig. 7 schematically illustrates the unit cell used in the simulations. In each simulation, regarding each of the multiple light beams having different incident angles, the amount of phase shift and a response of transmittance in the case of changing a diameter D of a microstructure 120 in a range from 1 $\mu$m to 5 $\mu$m have been calculated. The amount of phase shift is a difference between a phase $\phi$ of the light incident on the unit cell and a phase $\phi'$ of the light exiting from the unit cell. In the present specification, the amount of phase shift may simply be referred to as the "phase" in some cases. The transmittance represents a ratio of an intensity of the light exiting from the unit cell relative to an intensity of the light incident on the unit cell.

As illustrated in Fig. 6A, the phase varies depending on the diameter D of the microstructure 120. Moreover, the response of the phase to the change in diameter D varies with the incident angle of light. In the meantime, as illustrated in Fig. 6B, the transmittance also varies depending on the diameter D of the microstructure 120. In addition, the response of the transmittance to the change in diameter D varies with the incident angle of the light as well. The diameter of each microstructure 120 is determined based on these design data obtained from the simulations. To be more precise, the diameter of each microstructure 120 is determined in accordance with the following flow from (a1) to (a3):

(a1) The ideal phase at each position on the lens surface is determined in such a way as to conform to the ideal phase profile to be determined from prescribed lens specifications;
(a2) One or more candidates for the diameter D corresponding to the ideal phase are specified for each position on the lens surface with reference to design data on the corresponding incident angle; and
(a3) In the case where multiple candidates for the diameter D are specified, the diameter D having the highest transmittance among the candidates is determined as the diameter of the microstructure 120 with reference to the design data that represents the relation between the transmittance and the diameter D corresponding to the relevant incident angle.

According to the above-described method, the optimum value is determined as the diameter of the microstructure 120 at each position on the lens surface, so that the ideal phase profile can be realized more accurately. Thus, it is possible to realize the ideal phase profile regarding the obliquely incident light, so that the lens performance can be improved.

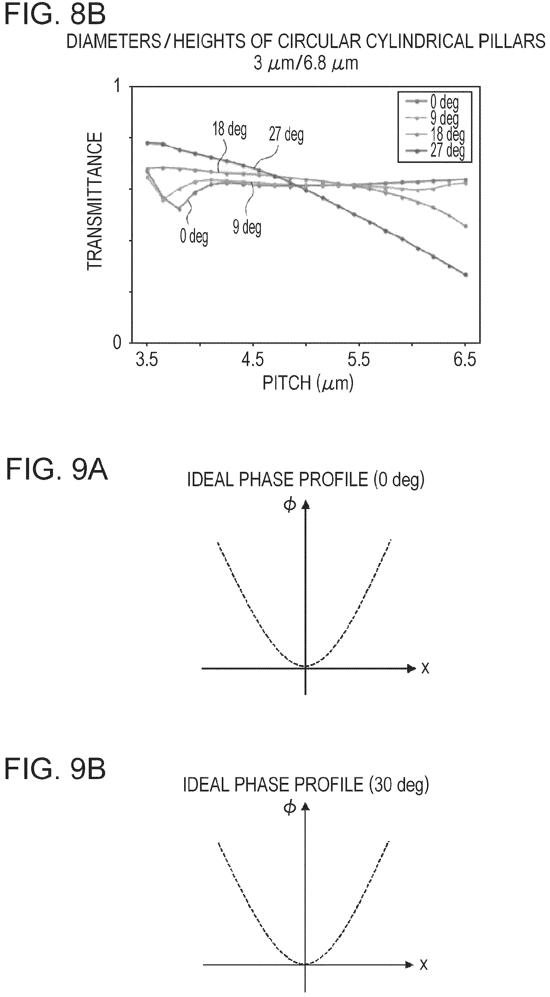

In the above-described example, the diameter of the microstructure 120 at each position on the lens surface is appropriately determined based on the design data. However, this is merely an example. The interval (or the pitch) of the microstructures 120 may be determined based on the design data corresponding to the incident angle, in addition to or instead of the diameters of the microstructures 120. Such an example will be described below with reference to Figs. 8A and 8B.

Fig. 8A is a diagram illustrating an example of design data representing relations between the pitches and the phases of the microstructures 120. Fig. 8B is a diagram illustrating an example of design data representing relations between the pitches and the transmittance of the microstructures 120. These design data have also been obtained by conducting respective simulations with multiple types of incident light having different incident angles. In these examples, each microstructure 120 is a circular cylindrical pillar having a height of 6.8 $\mu$m, and a diameter of 3 $\mu$m (a fixed value). The responses of the phase and the transmittance in the case of changing the pitch of the microstructures 120 in a range from 3.5 $\mu$m to 6.5 $\mu$m have been calculated.

As illustrated in Fig. 8A, the phase varies depending on the pitch (that is, the interval) of the microstructures 120. Moreover, the response of the phase to the change in pitch varies with the incident angle of light. In the meantime, as illustrated in Fig. 8B, the transmittance also varies depending on the pitch of the microstructures 120. In addition, the response of the transmittance to the change in pitch varies with the incident angle of the light as well. Accordingly, the pitch of the respective microstructures 120 may be determined based on these design data obtained from the simulations. To be more precise, the pitch of the respective microstructures 120 may be determined in accordance with the following flow from (b1) to (b3):

(b 1) The ideal phase at each position on the lens surface is determined in such a way as to conform to the ideal phase profile to be determined from prescribed lens specifications;

(b2) One or more candidates for the pitch corresponding to the ideal phase are specified for each position on the lens surface with reference to design data on the corresponding incident angle; and

(b3) In the case where multiple candidates for the pitch are specified, the pitch having the highest transmittance among the candidates is determined as the pitch of the microstructures 120 with reference to the design data that represents the relation between the transmittance and the pitch corresponding to the relevant incident angle.

According to the above-described method, the optimum value is determined as the pitch (that is, the interval) of the microstructures 120 at each position on the lens surface, so that the ideal phase profile can be realized more accurately. Thus, it is possible to realize the ideal phase profile regarding the obliquely incident light, so that the lens performance can be improved.

Here, both the diameter and the pitch (that is, the interval) of the microstructures 120 at the respective positions on the lens surface may be determined in accordance with the ideal phase profile. In that case, reference may be made to design data indicating the relations between combinations of the diameters and the pitches (or the intervals) of the microstructures 120 and the phase and the transmittance, the design data being created in advance for each of the incident angles. Alternatively, other parameters defining the structure such as the height or the orientation of each microstructure 120 may be determined in accordance with a similar method. For example, in the case where the microstructure 120 has an elliptic cylindrical structure and is a projecting body or a recessed body, at least one of the height (or a depth), the major axis, and the minor axis of the elliptic cylindrical structure may be determined in accordance with the same method as the above-described method. Meanwhile, in the case where the microstructure 120 has a polygonal prismatic structure and is a projecting body or a recessed body, the height (or the depth) and/or a length of at least one of sides of the polygonal prismatic structure may be determined in accordance with the same method as the above-described method. Some of the multiple microstructures 120 may each have the elliptic cylindrical structure and be a projecting body or a recessed body while other some of the multiple microstructures 120 may each have the polygonal prismatic structure and be a projecting body or a recessed body.

Next, effects of the above-described designing method will be described with reference to Figs. 9A to 11C and in comparison with the designing method according to the related art.

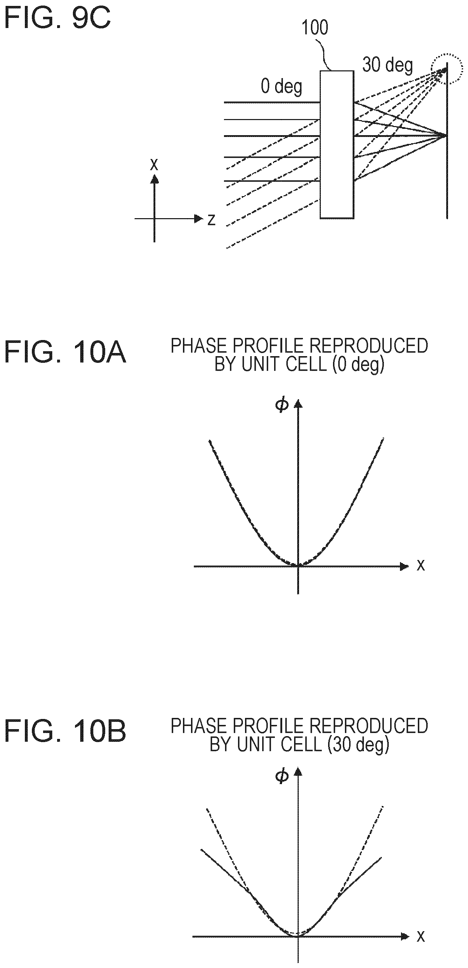

Figs. 9A and 9B are diagrams illustrating examples of the ideal phase profile of the metalens. Fig. 9A illustrates an example of the ideal phase profile with respect to the incident light having the incident angle equal to 0 degrees. Fig. 9B illustrates an example of the ideal phase profile with respect to the incident light having the incident angle equal to 30 degrees. In these diagrams, the horizontal axis x represents a coordinate in a direction from the position of the optical axis as the origin toward the outer periphery on the lens surface. The ideal phase profile is constant irrespective of the incident angle. Fig. 9C is a diagram schematically illustrating the light focusing performance of the metalens 100 in the case where the ideal phase profile is realized. The z axis is a coordinate axis parallel to the optical axis. In the case where the ideal phase profile is realized, not only the normally incident light but also the obliquely incident light is focused on one point on an imaging surface.

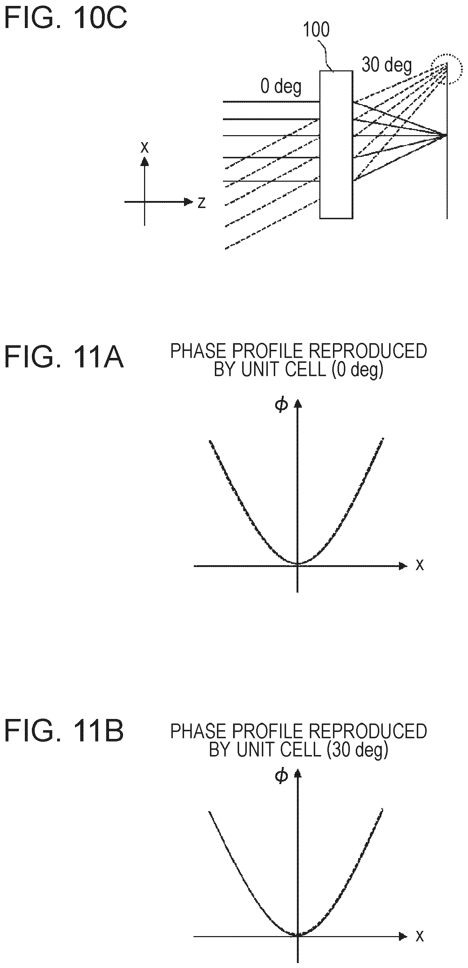

Figs. 10A and 10B are diagrams illustrating examples of a phase profile reproduced by a unit cell designed in accordance with the method of the related art. Fig. 10A illustrates an example of the phase profile reproduced by the unit cell in the case where the incident angle is equal to 0 degrees. Fig. 10B illustrates an example of the phase profile reproduced by the unit cell in the case where the incident angle is equal to 30 degrees. According to the method of the related art, the structure or the layout of each microstructure 120 at any position on the lens surface is determined with reference to the design data in the case of the normal incidence. For this reason, as illustrated in Fig. 10B, the phase profile in the case where the incident angle is different from 0 degrees deviates from the ideal phase profile particularly at a location away from the center of the lens. Fig. 10C is a diagram exemplifying the light focusing performance of the metalens 100 designed in accordance with the method of the related art. In the case of light having a large incident angle, the light fails to be focused on one point on the imaging surface since the ideal phase profile is not reproduced, thus causing blur.

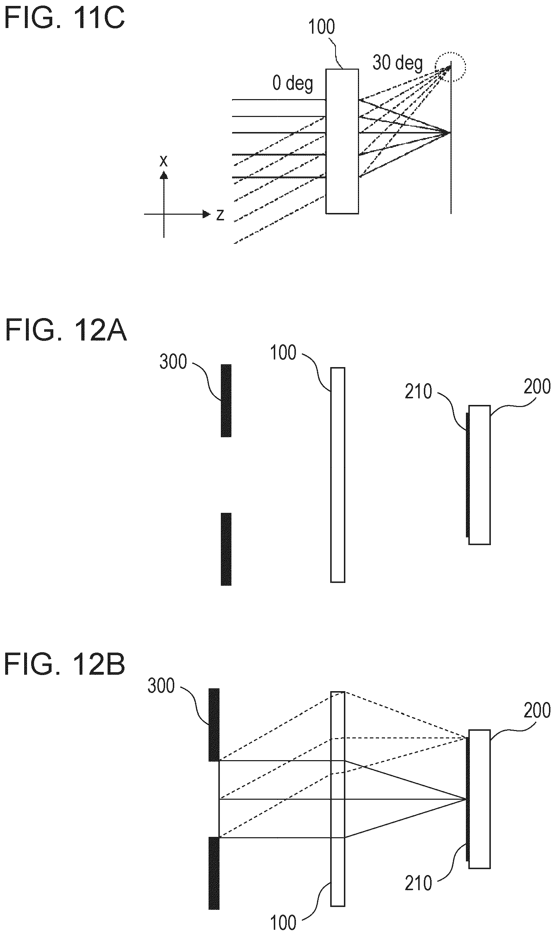

Figs. 11A and 11B are diagrams illustrating examples of a phase profile reproduced by a unit cell designed in accordance with the method of the present embodiment. Fig. 11A illustrates an example of the phase profile reproduced by the unit cell in the case where the incident angle is equal to 0 degrees. Fig. 11B illustrates an example of the phase profile reproduced by the unit cell in the case where the incident angle is equal to 30 degrees. In the present embodiment, the structure or the layout of each microstructure 120 is determined with reference to the design data which are different depending on the positions within the lens surface. For this reason, the phase profiles are close to the ideal phase profile not only in the case where the incident angle is equal to 0 degrees but also in the case where the incident angle is equal to 30 degrees. Fig. 11C is a diagram exemplifying the light focusing performance of the metalens 100 designed in accordance with the method of the present embodiment. Since the ideal phase profile is reproduced in the case of light having a large incident angle such as 30 degrees, the light is focused on one point on the imaging surface while causing no blur.

As described above, according to the metalens 100 of the present embodiment, the parameters such as the structure and/or the interval of each of the multiple microstructures are designed in such a way as to compensate for (that is, to reduce) the phase variation that depends on the incident angle of the incident light at each position in the region where the multiple microstructures 120 are provided. In this way, the ideal phase profile can easily be reproduced irrespective of the incident angle and the light focusing performance can be improved.

In the present embodiment, the parameters corresponding to the ideal phase may further be determined while taking into account a variation in transmittance in the case of changing the parameters such as the structure and/or the interval of each of the multiple microstructures. Thus, it is possible to realize the structures and the layouts of the optimum microstructures that can realize high transmittance in addition to the ideal phase.

Here, the dependency of the phase variation on the incident angle is small depending on the material or the structure constituting the metalens 100. However, there may also be a case of an increase in dependency of the phase variation on the incident angle. In such a case, the structure and/or the intervals of the microstructures 120 may be determined while taking into account only the dependency of the transmittance variation on the incident angle without considering the dependency of the phase variation on the incident angle. For example, the parameters such as the structure and/or the interval of each of the multiple microstructures may be designed in such a way as to compensate for (that is, to reduce) the variation in transmittance that depends on the incident angle of the incident light at each position in the region where the multiple microstructures 120 are provided. In this way, targeted transmittance distribution can easily be realized irrespective of the incident angle and the lens performance can be improved.

As described above, the structure and/or the interval of each of the multiple microstructures 120 varies depending on the position on the substrate surface in accordance with the incident angle of the incident light at each position in the region where the multiple microstructures 120 are provided. To be more precise, the structure and/or the interval of each of the multiple microstructures 120 may be determined in such a way as to compensate for the variation in phase and/or transmittance depending on the incident angle of the incident light at each position in the region where the multiple microstructures are provided. This makes it easier to realize the ideal lens performance.

A method of manufacturing the metalens 100 according to the present embodiment includes (a) determining the structure and/or the interval of each of the multiple microstructures 120 in such a way as to compensate for the variation in phase and/or transmittance depending on the incident angle of the incident light at each position in the region where the multiple microstructures 120 are provided, and (b) forming the multiple microstructures 120 on the surface of the substrate in such a way as to be arranged at the determined intervals. According to the above-described method, it is possible to manufacture the metalens 100 having the ideal lens performance.

Next, an example of an imaging device including the above-described metalens 100 will be described.

Fig. 12A is a diagram illustrating a schematic configuration of the imaging device. The imaging device includes the metalens 100, an image sensor 200, and an aperture diaphragm 300. The image sensor 200 includes an imaging surface 210 on which multiple photodetector cells are arranged. The aperture diaphragm 300 is disposed in front (that is, on a photographic subject side) of the metalens 100. A system including a combination of the metalens 100 and the aperture diaphragm 300 will be referred to as an "optical system". The imaging device includes the optical system and the image sensor 200. A shape of the aperture diaphragm 300 may be an ellipse (inclusive of an exact circle) or a polygon. The incident light is incident on the metalens 100 while passing through the aperture diaphragm 300. The incident light is focused with the metalens 100, thus forming an image on the imaging surface 210 of the image sensor 200. In this configuration, the structure and/or the interval of the microstructures varies properly in accordance with a distance from a point of intersection of the center axis of the aperture diaphragm 300 with the surface on the substrate of the metalens 100 provided with the multiple microstructures.

Fig. 12B is a diagram illustrating an example of multiple light beams that pass through the aperture diaphragm 300. Provision of the aperture diaphragm 300 makes it easier to control the positions within the lens surface where the main light beams at the respective incident angles reach. In this way, it is possible to enhance the effect of improvement in light focusing performance by the designing method of the present embodiment. Next, an example of a light irradiation device including the aforementioned metalens 100 will be described.

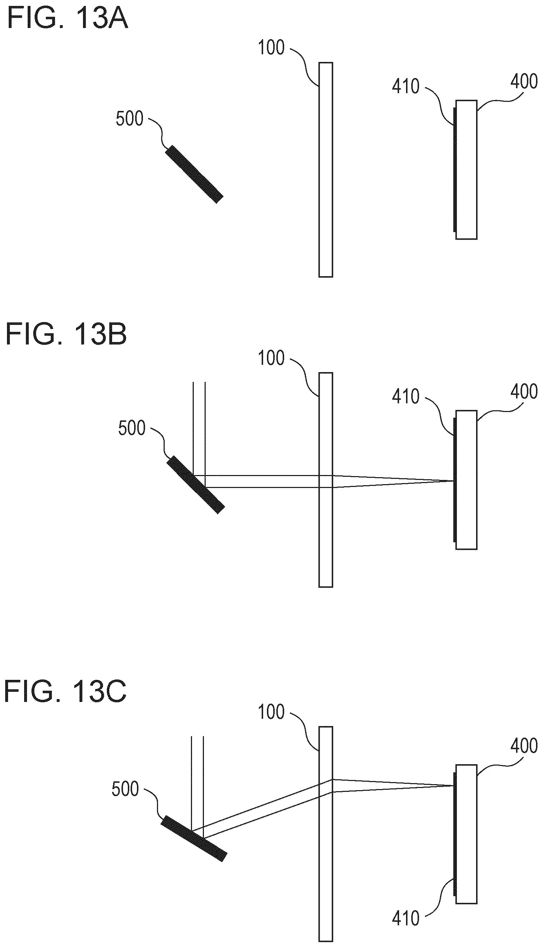

Fig. 13A is a diagram illustrating a schematic configuration of the light irradiation device. The light irradiation device includes the metalens 100, a light irradiation body 400, and a scanning optical system 500. The light irradiation body 400 includes a light irradiation surface 410. The scanning optical system 500 is disposed in front of the metalens 100. A system including a combination of the metalens 100 and the scanning optical system 500 will also be referred to as the "optical system". The light irradiation device includes the optical system and the light irradiation body 400. The scanning optical system 500 may be any one of a Galvano scanner, a polygon scanner, and a MEMS scanner. The incident light is incident on the metalens 100 through the scanning optical system 500. The incident light is focused with the metalens 100, and the light irradiation surface 410 of the light irradiation body 400 is irradiated with a focused light flux. In this configuration, the structure and/or the interval of the microstructures varies properly in accordance with a distance from a point of intersection of the center axis (that is, the optical axis) of the scanning optical system 500 with the surface on the substrate of the metalens 100 provided with the multiple microstructures.

Fig. 13B is a diagram illustrating an example of a light beam that is normally incident on the metalens 100 through the scanning optical system 500. Fig. 13C is a diagram illustrating an example of a light beam that is obliquely incident on the metalens 100 through the scanning optical system 500. The scanning optical system 500 may be configured to be coupled to an electric motor and to change an angle of a mirror by rotation of the electric motor, for example. By changing the angle of the mirror, it is possible to change a direction of reflection of light emitted from a light source. Optical scanning by the scanning optical system 500 makes it easier to control the positions within the lens surface where the main light beams at the respective incident angles reach. In this way, it is possible to enhance the effect of improvement in light focusing performance by the designing method of the present embodiment.

(Example)

Next, an example of the optical lens will be described.

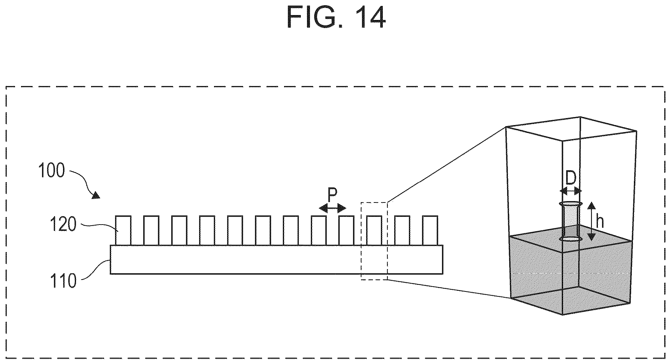

Fig. 14 is a diagram schematically illustrating an example of the metalens 100. In this example, the substrate 110 and the multiple microstructures 120 are formed from the same material. The substrate 110 and the respective microstructures 120 are formed from a material that contains silicon having a crystal plane orientation (100) as a major ingredient. Here, the crystal plane orientation of silicon may be (110) or (111) instead. In the meantime, a material other than silicon may be used instead.

A thickness of the substrate 110 of the metalens 100 is equal to 500 $\mu$m. A shape of the substrate 110 is a square shape as illustrated in Fig. 1, and its size is 8 mm $\times$ 8 mm. The multiple microstructures 120 are arranged within a circular region having a diameter of 8 mm on the surface of the substrate 110. Fig. 14 schematically illustrates a cross section of a certain portion of the metalens 100.

Each of the microstructures 120 illustrated in Fig. 14 is a circular cylindrical pillar. The target wavelength region is equal to 10.6 $\mu$m. As illustrated in Figs. 6A and 6B, the diameter D of each microstructure 120 is in a range from 1 $\mu$m to 5 $\mu$m, which is determined in accordance with a target value of the phase as well as the transmittance at the relevant position. As illustrated in Figs. 8A and 8B, the interval (that is, the pitch) P of the microstructures 120 is in a range from 3.5 $\mu$m to 6.8 $\mu$m, which is determined in accordance with the target value of the phase as well as the transmittance at the relevant position. The target value of the phase at each position is set such that a focal distance of the metalens 100 becomes 5 mm. The height of each microstructure 120 is equal to 6.8 $\mu$m. The maximum angle of view of the metalens 100 is set to $\pm 30°$.

The aperture diaphragm 300 is disposed in front of the metalens 100 as illustrated in Fig. 12B. The shape of the aperture diaphragm 300 is circular, and the aperture diaphragm 300 has the size of the diameter equal to 3 mm. A distance between the aperture diaphragm 300 and the substrate 110 is equal to 4 mm. Note that the numerical values in this example are exemplary and may be appropriately adjusted depending on the usage or purpose of the metalens 100.

The metalens 100 may be produced by using general semiconductor manufacturing techniques such as lithography. For example, the metalens 100 may be produced in accordance with the following method. First, a silicon substrate in which the crystal plane orientation of its principal surface is the (100) plane is prepared as the substrate 110. Next, a positive resist is applied to the principal surface of the silicon substrate in accordance with a method such as a spin-coating method. Subsequently, a desired location thereof is irradiated with light or an electron beam and then undergoes a development process. Thus, the resist at the location irradiated with the light or the electron beam is removed. This silicon substrate is subjected to etching by adopting a reactive ion etching technique or the like while using an etching gas such as $SF_6$ gas. Hence, the principal surface of the silicon substrate at the location deprived of the resist is etched off. Thereafter, the resist remaining on the principal surface of the silicon substrate is removed in a wet process using a resist stripping solution and the like or in a dry process using $O_2$ ashing and the like. After these steps, it is possible to produce the metalens 100 provided with the substrate 110 and the respective microstructures 120.

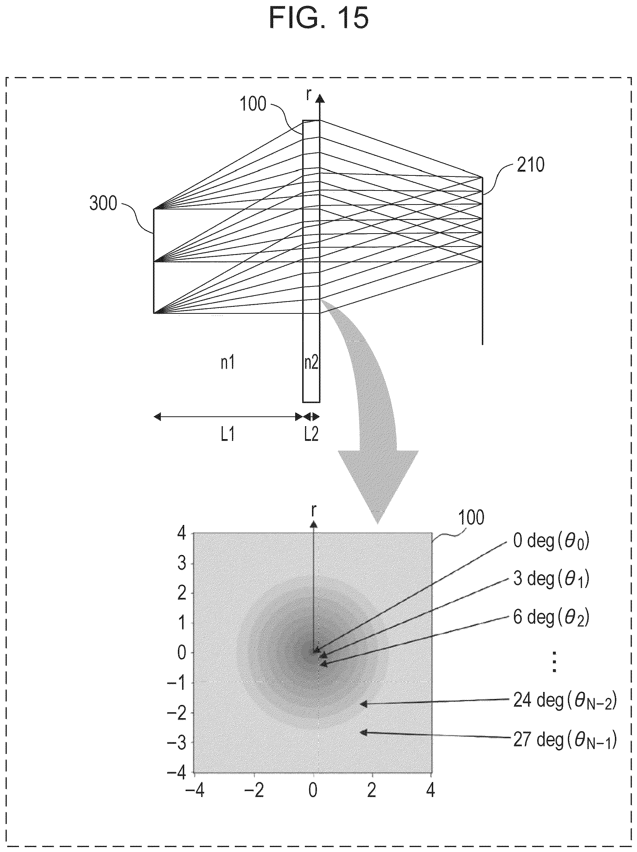

Fig. 15 is a diagram illustrating an example of a method of area segmentation of the lens surface on which the microstructures 120 are arranged. As described above, the lens surface is segmented into the multiple areas, and the structures or the layouts of the respective microstructures 120 are determined based on the design data that are different depending on the areas. The area segmentation is carried out based on the position within the lens surface where the respective main light beams having the different incident angles reach. A refractive index of a medium (such as air) around the metalens 100 will be defined as n1, a refractive index of the metalens 100 will be defined as n2, the distance between the aperture diaphragm 300 and the metalens 100 will be defined as L1, a maximum incident angle will be defined as $\theta_{max}$, and the number of discretization of the incident angle will be defined as N. In this example, $\theta_{max}$ = 27 and N = 10 hold true. From these numerical values, the multiple areas are determined as depicted in the following Table 1.

[Table 1]

| MAXIMUM INCIDENT ANGLE $\theta_{max}$ [deg] | 27 |
|---|---|
| NUMBER OF DISCRETIZATION OF INCIDENT ANGLE N | 10 |
| INCIDENT ANGLE $\theta_i$ [deg](i=0 - N-1) | $\left(\dfrac{\theta_{max}}{N-1}\right) \times i$ |
| POSITION $r_i$ OF MAIN LIGHT BEAM AT INCIDENT ANGLE $\theta_i$ [mm] | $L1 \times tan\theta_i + L2 \times tan\left\{sin^{-1}(\dfrac{n1}{n2}\sin\theta_i)\right\}$ |
| LIGHT BEAM AREA $\Delta r_i$ [mm] | $r_i \pm (r_{i+1}-r_i)/2$ |

Here, the position $r_i$ of the main light beam at the incident angle $\theta_i$ represents the distance from the point of intersection of the lens surface and the optical axis (that is, the center of the lens surface).

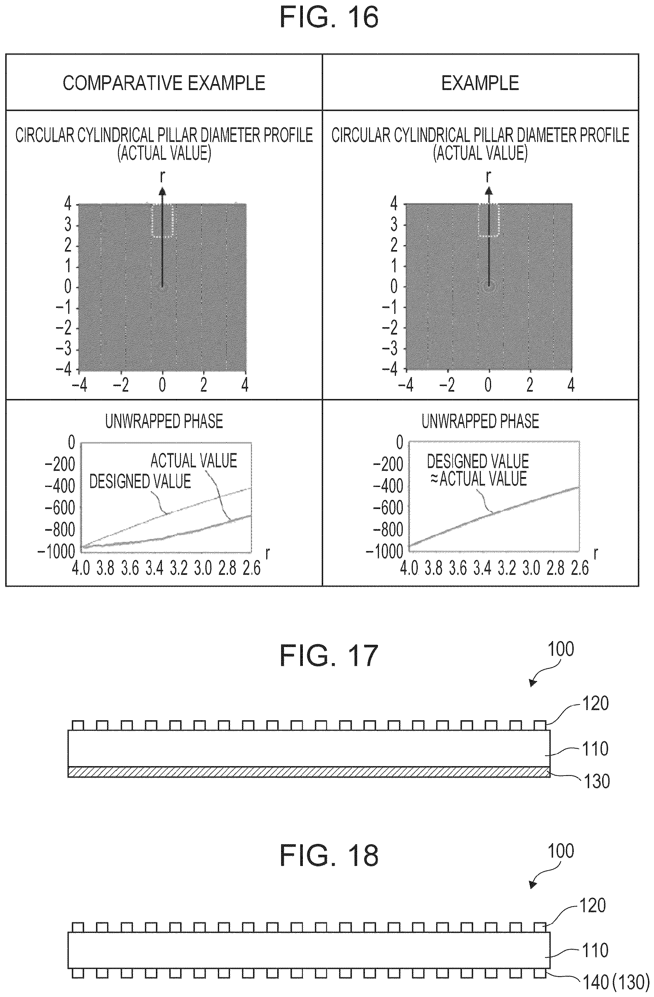

Fig. 16 is a diagram illustrating a difference in effect between the example and a comparative example in which the structures and the layouts of the respective microstructures 120 are determined based on the design data that take into account the normal incidence only. Diagrams on the upper left and the upper right in Fig. 16 represent distribution of actual values of the diameters of the pillars within the lens surface in the case of adopting the circular cylindrical pillars as the microstructures 120. Diagrams on the lower left and the lower right in Fig. 16 are graphs depicting positional changes of the phases in regions near ends of the metalenses (regions surrounded by dotted-line frames in the upper diagrams) where deviations from the designed phases are prone to increase. In these graphs, the horizontal axis indicates a distance r from the lens center while the vertical axis indicates designed values and actual values of unwrapped phases. As understood from these graphs, there is a significant deviation between the designed value and the actual value in the comparative example whereas there is substantially no deviation in the example. The effect of the present example has been confirmed from this result.

While the effect attributable to provision of the aperture diaphragm has been described in the present example, a similar effect can be expected by controlling the positions within the lens surface where the main light beams at the respective incident angles reach by installing a scanning optical system that uses a laser and the like as the incident light.

(Modified Example)

In the above-described example, the substrate 110 and each of the multiple microstructures 120 are formed from the same material. However, these constituents may be formed from different materials. In order to suppress unnecessary reflection or refraction between the substrate 110 and the array of the multiple microstructures 120, a difference between the refractive index of the substrate 110 and the refractive index of each of the multiple microstructures 120 may be less than or equal to 10%, less than or equal to 5%, or less than or equal to 3% of the smallest refractive index out of the refractive index of the substrate 110 and the refractive index of each of the multiple microstructures 120.

The substrate 110 and each of the multiple microstructures 120 may be formed from a material containing, as a major ingredient, at least one selected from the group consisting of silicon, germanium, chalcogenides, chalcohalides, zinc sulfide, zinc selenide, fluoride compounds, thallium halides, sodium chloride, potassium chloride, potassium bromide, cesium iodide, and plastics (such as polyethylene), for example. Here, the "major ingredient" means an ingredient having the largest content ratio expressed in mole percentage in the material. In the case where the substrate 110 and each of the multiple microstructures 120 are formed from the above-mentioned material, it is possible to increase the transmittance of infrared rays from 2.5 $\mu$m to 25 $\mu$m, for example.

An AR (Anti-Reflection) function film may additionally be formed in order to improve the transmittance. Besides the AR function film, various optical modulation layers having an optical modulation function may be provided to the metalens 100.

Fig. 17 is a schematic sectional view illustrating an example of the metalens 100 including an optical modulation layer 130. The metalens 100 in this example includes the optical modulation layer 130 having the optical modulation function, which is located on a surface of the substrate 110 on the opposite side from the surface provided with the microstructures 120. The optical modulation layer 130 may have an anti-reflection function against the incident light or may have other functions. For example, the optical modulation layer 130 may have any of functions as a high-pass filter, a low-pass filter, and a band-pass filter which allow passage of only the light in the target wavelength region. Meanwhile, the optical modulation layer 130 may be a polarizing filter having a function to allow passage of only specific polarized light out of the incident light. In the meantime, the optical modulation layer 130 may be a filter having a function to attenuate or amplify a transmission intensity of the incident light in a specific wavelength region. The optical modulation layer 130 may be an ND (Neutral Density) filter. The optical modulation layer 130 may have a function to deflect the incident light at a specific angle. The optical modulation layer 130 may be formed from a single layer or multiple layers depending on the desired optical modulation function. Meanwhile, the optical modulation layer 130 can be formed by using a film-forming method such as a vacuum vapor deposition method or a sputtering method.

Fig. 18 is a diagram illustrating an example of the metalens 100 in which the optical modulation layer 130 includes other multiple microstructures 140 different from the microstructures 120. In this example, one of surfaces of the substrate 110 is provided with the array of the microstructures 120 while the other surface of the substrate 110 is provided with an array of the other microstructures 140. Each of the other microstructures 140 may be a projecting body or a recessed body. The projecting body or the recessed body may be a conical or pyramidal body having such a shape as an elliptic cone or a polygonal pyramid, or may be a columnar body having such a shape as an elliptic cylinder or a polygonal prism. Shapes, sizes, and layouts of the other microstructures 140 may be different from the shapes, the sizes, and the layouts of the microstructures 120. The other microstructures 140 can be produced in accordance with the same method as the production processes of the respective microstructures 120 discussed in the above-described embodiment. As in this example, provision of the arrays of the microstructures (that is, the metasurfaces) on both sides of the substrate 110 makes it easier to realize a lens function that might be difficult to be attained only on one side.

Industrial Applicability

The optical lens of the present disclosure is widely applicable to an instrument adopting a lens, examples of which include a camera, a LiDAR sensor, a projector, an AR display unit, a telescope, a microscope, a scanning optical device, and so forth.

Reference Signs List

| | |
|---|---|
| 100 | metalens |
| 110 | substrate |
| 120 | microstructure |
| 130 | optical modulation layer |
| 140 | microstructure |
| 200 | image sensor |
| 210 | imaging surface |
| 300 | aperture diaphragm |
| 400 | light irradiation body |
| 410 | light irradiation surface |
| 500 | scanning optical system |

**Claims**

1. An optical lens used for light in a predetermined target wavelength region, comprising:

   a substrate; and
   a plurality of microstructures arranged on a surface of the substrate at intervals shorter than a shortest wavelength in the target wavelength region, wherein
   a structure and/or the interval of each of the plurality of microstructures varies depending on a position on the surface and in accordance with an incident angle of incident light at each position in a region where the plurality of microstructures is provided.

2. The optical lens according to claim 1, wherein the structure and/or the interval of each of the plurality of microstructures is determined in such a way as to compensate for a variation in phase and/or transmittance depending on the incident angle of the incident light at each position in the region where the plurality of microstructures is provided.

3. The optical lens according to claim 2, wherein an amount of variation in phase and/or transmittance in a case where the incident light is incident on the plurality of microstructures indicates a response being different depending on the incident angle.

4. The optical lens according to claim 2 or 3, wherein the structure and/or the interval of each of the plurality of microstructures is determined based on design data defining a relation between at least one parameter defining the structure and/or the interval, and the phase and/or the transmittance, the design data being created for each of a plurality of incident angles.

5. The optical lens according to claim 4, wherein

the design data are created in advance for each of a plurality of areas included in the region,
each of the plurality of areas corresponds to one of the plurality of incident angles, and
the structure and/or the interval of each of the plurality of microstructures is determined based on the design data corresponding to one of the plurality of areas that the position of the microstructure belongs to.

6. The optical lens according to any one of claims 2 to 5, wherein

each of the plurality of microstructures has an elliptic cylindrical structure and is a projecting body or a recessed body, and
at least one of a height, a major axis, and a minor axis of the elliptic cylindrical structure is determined in such a way as to compensate for the variation in phase and/or transmittance depending on the incident angle of the incident light at each position in the region.

7. The optical lens according to any one of claims 2 to 6, wherein

each of the plurality of microstructures has an elliptic cylindrical structure and is a projecting body or a recessed body,
the plurality of microstructures is periodically arranged, and
a pitch of the plurality of microstructures is determined in such a way as to compensate for the variation in phase and/or transmittance depending on the incident angle of the incident light at each position in the region.

8. The optical lens according to any one of claims 2 to 5, wherein

each of the plurality of microstructures has a polygonal prismatic structure and is a projecting body or a recessed body, and
a height and/or a length of at least one of sides of the polygonal prismatic structure is determined in such a way as to compensate for the variation in phase and/or transmittance depending on the incident angle of the incident light at each position in the region.

9. The optical lens according to any one of claims 2 to 5 and 8, wherein

each of the plurality of microstructures has a polygonal prismatic structure and is a projecting body or a recessed body,
the plurality of microstructures is periodically arranged, and
a pitch of the plurality of microstructures is determined in such a way as to compensate for the variation in phase and/or transmittance depending on the incident angle of the incident light at each position in the region.

10. The optical lens according to any one of claims 1 to 5, wherein

some of the plurality of microstructures each have an elliptic cylindrical structure and are each a projecting body or a recessed body, and
other some of the plurality of microstructures each have a polygonal prismatic structure and are each a projecting body or a recessed body.

11. The optical lens according to any one of claims 1 to 10, wherein the substrate and each of the plurality of microstructures have transparency with respect to light in the target wavelength region.

12. The optical lens according to any one of claims 1 to 11, wherein a difference between a refractive index of the substrate and a refractive index of each of the plurality of microstructures is less than or equal to 10% of a refractive index being smallest of the refractive index of the substrate and the refractive index of each of the plurality of microstructures.

13. The optical lens according to any one of claims 1 to 12, wherein the substrate and each of the plurality of microstructures are formed from an identical material.

14. The optical lens according to any one of claims 1 to 13, wherein the target wavelength region includes at least a portion of a wavelength region of infrared rays greater than or equal to 2.5 $\mu$m and less than or equal to 25 $\mu$m.

15. The optical lens according to any one of claims 1 to 14, wherein the substrate and each of the plurality of microstructures are formed from a material containing, as a major ingredient, at least one selected from the group consisting of silicon, germanium, chalcogenides, chalcohalides, zinc sulfide, zinc selenide, fluoride compounds, thallium halides, sodium chloride, potassium chloride, potassium bromide, cesium iodide, and plastics.

16. The optical lens according to any one of claims 1 to 15, wherein

the optical lens is formed from a material containing silicon as a major ingredient, and
a crystal plane orientation of the silicon is (100), (110), or (111).

17. An optical system comprising:

the optical lens according to any one of claims 1 to 16; and
an aperture diaphragm, wherein
the incident light passes through the aperture diaphragm and is incident on the optical lens, and
the structure and/or the interval of the plurality of microstructures varies in accordance with a distance from a point of intersection of a center axis of the aperture diaphragm with the surface of the substrate.

18. The optical system according to claim 17, wherein a shape of the aperture diaphragm is an ellipse or a polygon.

19. An imaging device comprising:

the optical system according to claim 17 or 18; and
an image sensor that obtains an image of light focused with the optical lens.

20. An optical system comprising:

the optical lens according to any one of claims 1 to 16; and
a scanning optical system, wherein
the incident light passes through the scanning optical system and is incident on the optical lens, and
the structure and/or the interval of the plurality of microstructures varies in accordance with a distance from a point of intersection of an optical axis of the scanning optical system with the surface of the substrate.

21. The optical system according to claim 20, wherein the scanning optical system is any one of a Galvano scanner, a polygon scanner, and a MEMS scanner.

22. A light irradiation device comprising:

the optical system according to claim 20 or 21, wherein
the light irradiation device irradiates an object with a light flux focused with the optical lens.

23. A method of manufacturing an optical lens used for light in a predetermined target wavelength region, the optical lens being provided with a plurality of microstructures arranged at intervals shorter than a shortest wavelength in the target wavelength region, the method comprising:

determining a structure and/or the interval of each of the plurality of microstructures in such a way as to compensate for a variation in phase and/or transmittance depending on an incident angle of incident light at each position in a region where the plurality of microstructures is provided; and

forming the plurality of microstructures on a surface of a substrate in such a way as to be arranged at the determined intervals.

FIG. 1

FIG. 2

FIG. 3

# FIG. 4

# FIG. 5

# FIG. 6A

PITCHES / HEIGHTS OF CIRCULAR CYLINDRICAL PILLARS
6.2 μm / 6.8 μm

# FIG. 6B

PITCHES / HEIGHTS OF CIRCULAR CYLINDRICAL PILLARS
6.2 μm / 6.8 μm

# FIG. 7

# FIG. 8A

DIAMETERS / HEIGHTS OF CIRCULAR CYLINDRICAL PILLARS
3 $\mu$m/6.8 $\mu$m

# FIG. 8B

DIAMETERS / HEIGHTS OF CIRCULAR CYLINDRICAL PILLARS
3 $\mu$m / 6.8 $\mu$m

# FIG. 9A

IDEAL PHASE PROFILE (0 deg)

# FIG. 9B

IDEAL PHASE PROFILE (30 deg)

FIG. 9C

FIG. 10A   PHASE PROFILE REPRODUCED
BY UNIT CELL (0 deg)

FIG. 10B   PHASE PROFILE REPRODUCED
BY UNIT CELL (30 deg)

FIG. 10C

FIG. 11A   PHASE PROFILE REPRODUCED
BY UNIT CELL (0 deg)

FIG. 11B   PHASE PROFILE REPRODUCED
BY UNIT CELL (30 deg)

## FIG. 11C

## FIG. 12A

## FIG. 12B

FIG. 13A

FIG. 13B

FIG. 13C

# FIG. 14

# FIG. 15

# FIG. 16

| COMPARATIVE EXAMPLE | EXAMPLE |
|---|---|
| CIRCULAR CYLINDRICAL PILLAR DIAMETER PROFILE (ACTUAL VALUE) | CIRCULAR CYLINDRICAL PILLAR DIAMETER PROFILE (ACTUAL VALUE) |
| UNWRAPPED PHASE | UNWRAPPED PHASE |

# FIG. 17

# FIG. 18

## INTERNATIONAL SEARCH REPORT

| International application No. |
| --- |
| **PCT/JP2023/005439** |

| A. | CLASSIFICATION OF SUBJECT MATTER |
| --- | --- |

*G02B 1/02*(2006.01)i; *G02B 3/00*(2006.01)i; *G02B 5/18*(2006.01)i; *H04N 23/55*(2023.01)i
FI:   G02B5/18; H04N23/55; G02B1/02; G02B3/00 Z

According to International Patent Classification (IPC) or to both national classification and IPC

| B. | FIELDS SEARCHED |
| --- | --- |

Minimum documentation searched (classification system followed by classification symbols)

G02B1/02; G02B3/00; G02B5/18; H04N23/55

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-56370 A (SEIKO EPSON CORP) 08 April 2021 (2021-04-08) | 1-11, 23 |
|   | paragraphs [0040]-[0041], [0069]-[0072], fig. 10 | |
| Y | paragraphs [0015], [0040]-[0041], [0069]-[0072], fig. 10 | 12-22 |
| Y | WO 2021/025759 A1 (MASSACHUSETTS INSTITUTE OF TECHNOLOGY) 11 February 2021 (2021-02-11) | 12-22 |
|   | paragraphs [0048], [0053], [0055], [0057]-[0059], [0078] | |
| Y | JP 2019-516128 A (PRESIDENT AND FELLOWS OF HARVARD COLLEGE) 13 June 2019 (2019-06-13) | 20-22 |
|   | paragraphs [0028], [0111] | |
| Y | JP 2007-152766 A (SAMSUNG ELECTRONICS CO LTD) 21 June 2007 (2007-06-21) | 21 |
|   | paragraph [0061] | |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **02 March 2023** | **20 March 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

# EP 4 502 662 A1

| INTERNATIONAL SEARCH REPORT | | International application No. |
|---|---|---|
| Information on patent family members | | PCT/JP2023/005439 |

| Patent document cited in search report | | | Publication date (day/month/year) | Patent family member(s) | | | Publication date (day/month/year) |
|---|---|---|---|---|---|---|---|
| JP | 2021-56370 | A | 08 April 2021 | US 2021/0099681 A1 paragraphs [0066]-[0067], [0101]-[0104], fig. 10 CN 112578492 A | | | |
| WO | 2021/025759 | A1 | 11 February 2021 | JP 2022-544213 A paragraphs [0019], [0024], [0026], [0028]-[0030], [0049] US 2021/0044748 A1 paragraphs [0049], [0054], [0056], [0059]-[0061], [0080] US 2021/0306564 A1 EP 4010742 A1 CN 114341674 A KR 10-2022-0042406 A AU 2020324338 A CA 3146753 A1 IL 290397 A | | | |
| JP | 2019-516128 | A | 13 June 2019 | US 2019/0154877 A1 paragraphs [0028], [0208] WO 2017/176921 A1 EP 3440484 A1 CA 3020261 A1 KR 10-2018-0124106 A SG 11201808772W A CN 109196387 A | | | |
| JP | 2007-152766 | A | 21 June 2007 | (Family: none) | | | |

Form PCT/ISA/210 (patent family annex) (January 2015)

30

## EP 4 502 662 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019516128 W
- JP 2021071727 A
- US 20210306564